# EUROPÄISCHE PATENTSCHRIFT

(11) **EP 2 762 361 B1**
(45) Veröffentlichungstag und Bekanntmachung des Hinweises auf die Patenterteilung: **05.07.2017**
(21) Anmeldenummer: 14166901.0
(22) Anmeldetag: 10.12.2010
(51) Int. Cl.: B60Q 1/26, B60R 1/12

(54) **Beleuchtungseinheit**
Lighting unit
Unité d'éclairage

(43) Veröffentlichungstag der Anmeldung: 06.08.2014
(62) Teilanmeldung aus: 10194440.3
(73) Patentinhaber: SMR Patents S.à.r.l., 1653 Luxembourg (LU)
(72) Erfinder: Schmierer, Arne, 73230 Kirchheim (DE)
(74) Vertreter: Weber-Bruls, Dorothée

(56) Entgegenhaltungen:
- EP-A1- 2 119 595
- EP-A2- 1 726 480
- EP-A2- 2 258 977
- WO-A2-2010/055178
- DE-A1-102005 027 512
- ES-A1- 2 335 332

## Beschreibung

Es wird eine unitäre Beleuchtungseinheit in Form eines Beleuchtungsmoduls für den Außenspiegel eines Fahrzeugs vorgeschlagen, wobei ein Teil der Beleuchtungseinheit einem Blinker entspricht während ein anderer Teil der Beleuchtung als Warnanzeige für Assistenzsysteme dient.

Konventionelle Außenspiegel haben ein Design, das es erlaubt, den Spiegelkopf gegenüber dem Spiegelfuß von Hand oder motorisch in Fahrtrichtung des Fahrzeuges nach hinten abgeklappt werden kann. Zudem lässt sich der Spiegelglasträger im Spiegelkopf in der Regel vom Inneren des Fahrzeuges aus einstellen. Dadurch ist eine einwandfreie Sicht des Fahrers gewährleistet, wodurch eine hohe Verkehrssicherheit erreicht wird. Viele Außenspiegel weisen eine Blinkleuchte auf, die an der in Fahrtrichtung vorderen Seite des Spiegelgehäuses vorgesehen ist. Für neben oder hinter dem Außenspiegel befindliche Verkehrsteilnehmer ist die Blinkleuchte jedoch nicht oder nur ungenügend erkennbar. Daher werden Zusatz- LEDs verwendet, die entgegen der Fahrtrichtung abstrahlen und am äußersten Rand des Außenspiegels im Blinker integriert sind.

Nach den ECE Regeln soll ein Zusatzblinklicht im Außenspiegel einen Bereich beginnend bei 5° von der Fahrzeuglängsachse bis zu 60 ° zur Fahrzeuglängsachse in Fahrtgegenrichtung ausleuchten.

Aus dem Stand der Technik ist eine Vielzahl an Lösungen für Blinker im Außenspiegel bekannt. Dabei werden Blinkermodule in das Gehäuse eines Außenspiegels integriert. Diese Blinkermodule enthalten je nach Design Lichtwellenleiter, Reflektoren, Leiterplatten, Linsen und Abdeckscheiben und Leuchtmittel. Die Leuchtmittel sind durch die bekannten Vorteile immer mehr LEDs. Eine Ausführungsform ist aus der EP 0 858 932 A2 bekannt. In dieser Ausführungsform wird ein Blinkermodul gebildet, das einen Lichtleiter aufweist. Der Lichtleiter bildet mit dem Gehäuse eines Außenspiegels eine stetige Kontur aus. Das Licht einer LED wird an einem Ende des Lichtleiters eingekoppelt und über die gesamte Länge transportiert. Die Abstrahlung des Lichtes erfolgt über die gesamte Länge des Lichtleiters je nach Dichte der Auskoppelvorrichtungen und am Ende des Lichtleiters. Es erweist sich, dass diese Lösung für die optimale Ausleuchtung einer Beleuchtungseinrichtung nicht ausreicht. Man erreicht mit der Lösung der fernen Einkopplung von Licht und dem Transport von 5 bis 20 cm nicht die gewünscht Lichtstärke. Eine ähnliche Konfiguration mit einer Lichtquelle zum Bestrahlen eines Endes eines Lichtleiters, der Licht in einem Design-Bereich und einem Funktions-Bereich auskoppelt, ohne dass im Funktions-Bereich eine ausreichende Lichtdichte ankommt, ist in der EP 2 258 977 A2 beschrieben.

Aus der US 7,357,549 ist eine Beleuchtungseinheit bekannt, die Lichtleiterelemente aufweist, in die mindestens einen LED ragt. In dieser Ausführung wird der Lichtleiter in mehrere Abschnitte unterteilt und weist eine Aussparung entlang seiner Längenausdehnung auf. Durch die Ausnehmung im Lichtleiter, wird dieser in seiner Stabilität geschwächt und/oder die äußere stetige Oberfläche des Lichtleiters durch einen Erhebung gestört. Dadurch dass das Lichtleitmaterial optisch klar ist, ist der Lichteinkoppelpunkt von außen sichtbar, was den harmonischen Eindruck des Lichtleiters stört. Die EP 1 726 480 A2 betrifft eine Außenspiegelanordnung für ein Kraftfahrzeug mit einem Kanal, in dem zwei in entgegengesetzte Richtungen Licht abstrahlende Lichtquellen auf einer Platine angeordnet sind und der mit einer zumindest teilweise transparenten Abdeckung versehen ist.

Aus der EP 2 119 595 A1 ist ein Blinkermodul einer Außenspiegelanordnung für ein Kraftfahrzeug mit Paaren von Lichtquellen, die in unterschiedliche Richtungen in einem parabolförmigen Reflektor Licht aussenden, bekannt.

Weiterhin sind aus dem Stand der Technik Lösungen zur Anzeige einer Gefahrensituation bekannt, die an und/oder im Außenspiegel eines Fahrzeugs angebracht sind. Warnanzeigen müssen so angebracht sein, dass sie vom Fahrer des Fahrzeugs wahrgenommen werden, wenn sie aufleuchten. Es bietet sich daher eine Position an der inneren Gehäuseabdeckung des Außenspiegels an.

Hierzu sind Module bekannt, die von einem Assistenzsystem angesteuert werden und in Reaktion auf ein Steuersignal aufleuchten. Ein Beispiel ist die US 7,492,281, die den Einsatz einer Warnanzeige in der Gehäuseabdeckung aufzeigt. Die Warnanzeige ist als selbstständiges Modul ausgeführt und wird getrennt von weiteren Beleuchtungseinheiten in den Spiegelkopf eingebaut.

Die DE 10 2005 027 512 A1 betrifft eine Seitenspiegelvorrichtung für ein Kraftfahrzeug mit integrierter Standleuchte.

Alle im Stand der Technik bekannten Beleuchtungselemente für unterschiedliche Aufgaben des Außenspiegels sind als einzelne Bauelemente aufgebaut und werden in den dafür vorgesehenen Öffnungen einzeln integriert.

Die ES 2 335 332 A1 sowie die WO 2010/055178 A2 offenbaren Außenspiegelanordnungen mit einer Vielzahl von Funktionen.

Es ist Aufgabe der Erfindung, ein Beleuchtungsmodul zu schaffen, in dem Licht an zwei unterschiedlichen Stellen eingespeist und an unterschiedlichen Stellen des Außenspiegels ausgekoppelt wird, aber nur ein Bauteil zur Verwendung kommt, das als Ganzes in das Gehäuse des Außenspiegels eingesetzt wird.

Diese Aufgabe wird durch die Merkmale von Anspruch 1 gelöst. Die Ansprüche 2 und 3 beschreiben bevorzugte erfindungsgemäße Varianten.

Die nachfolgenden Figuren und die Beschreibung zeigen Ausführungsformen der Erfindung, die die Erfindung beispielhaft erläutern.
Fig. 1 zeigt den Stand der Technik;
Fig. 2 und Fig. 3 zeigen eine Beleuchtungseinheit in Vorder- und Rückansicht;
Fig. 4 zeigt eine Schnittdarstellung einer Ausführungsform einer erfindungsgemäßen Beleuchtungseinheit; und
Fig. 5 zeigt eine weitere Beleuchtungseinheit.

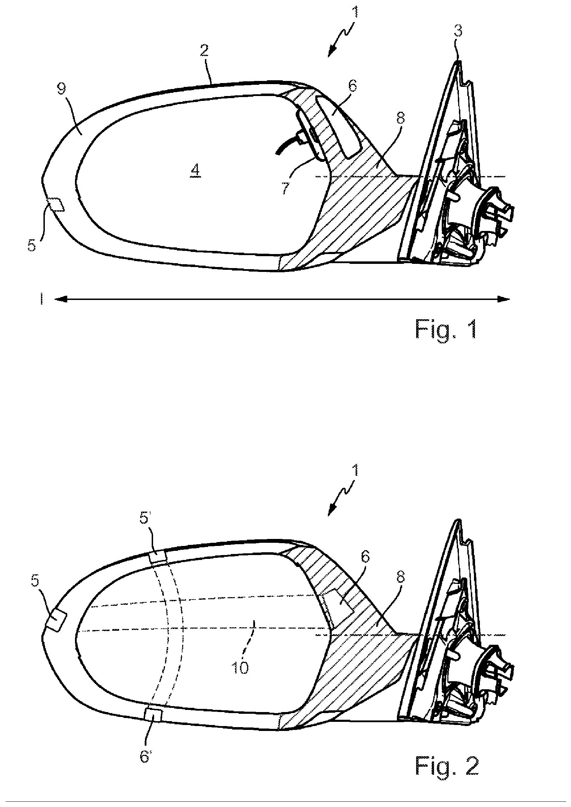

Figur 1 zeigt einen bekannten Fahrzeugaußenspiegel 1, der aus einem Spiegelkopf 2 und Spiegelfuß 3 besteht, die gelenkig miteinander verbunden sind. Der gezeigte Fahrzeugaußenspiegel weist einen Rahmen 9 auf, der eine Öffnung 4 für die Installation eines Spiegelglases, einer Glasträgerplatte, eines Glasverstellantriebs sowie weiterer elektrischer oder elektronischer Funktionen umschließt.

Der Spiegelkopf 2 ist mit Gehäuseabdeckungen verschlossen, die ein- oder mehrteilig sein können.

Der Fahrzeugaußenspiegel weist zwei getrennte Beleuchtungseinheiten auf. Die erste Beleuchtungseinheit ist ein Spiegelblinker, dessen Licht an der Auskoppelstelle des Blinkers 5 in einem Winkel von 5° bis 15° abgestrahlt wird. Der Verlauf des Blinkers ist in Figur 1 nicht weitere eingezeichnet, aber das Blinkermodul erstreckt sich entlang der Längsachse I des Fahrzeugspiegels. Die Auskopplung des Lichtes des Blinkers ist dabei nicht nur auf den Auskoppelbereich 5 beschränkt, sondern kann entlang des gesamten Blinkers verlaufen. Die Auskoppelstelle für die Blinkerfunktion liegt am fahrzugabgewandten Rand des Außenspiegels, damit andere Verkehrsteilnehmer den Blinker wahrnehmen können. Weiterhin weist der Fahrzeugaußenspiegel eine Warnanzeige auf, die als Warnanzeigenmodul 7 installiert ist. Das Warnanzeigenmodul 7 weist eine Auskoppelfläche 6 auf, die bündig in die Gehäuseabdeckung 2 des Außenspiegels integriert ist. Die Auskoppelfläche 6 der Warnanzeige befindet sich vorteilhafterweise im Bereich 8 an der Seite der Gehäuseabdeckung 2, die dem Fahrzeug zugewandt ist. Eine solche Anordnung von Beleuchtungseinheiten im Außenspiegel ist im Stand der Technik ausgeführt. Es werden zwei getrennte Beleuchtungsmodule eingesetzt und im Gehäuse des Spiegels installiert. Dafür müssen unterschiedliche Befestigungsmechanismen vorgesehen und die Beleuchtungsmodule getrennt kontaktiert werden. Da der Bauraum im Außenspiegel begrenzt ist, ist das Einsetzen der Beleuchtungsmodule oft ein Problem.

Zudem wird die Anzahl der Varianten des Außenspiegels erhöht. Je nachdem ob ein Blinker, eine Warnanzeige oder beide Beleuchtungseinheiten installiert werden, muss die Gehäuseabdeckung 2 des Spiegels unterschiedlich gestaltet sein. Die Spiegelgehäuseabdeckung 2 muss je nach installierten Beleuchtungseinheiten Aussparungen aufweisen, die von den Lichtfenstern der jeweiligen Einheiten belegt werden. Die Spiegelabdeckung kann auch gleich ausgeführt sein, ohne dass eine Leuchtfunktion integriert oder aktiviert ist.

Figur 2 zeigt ein Beleuchtungsmodul 10, das sich entlang der Rückseite der Gehäuseabdeckung des Außenspiegels in seiner Längsrichtung erstreckt. Im Bereich 5 ist die Auskoppelstelle des Blinkersignals angedeutet. Im Bereich 6 ist die Auskoppelfläche der Warnanzeige sichtbar, die sich wieder im bevorzugten Bereich 8 der Gehäuseabdeckung wiederfindet. Blinker als auch Warnanzeige sind in einem einzigen Beleuchtungsmodul 10 untergebracht. Die Auskoppelpunkte der jeweiligen Lichteinheiten hängen stark vom Design des Außenspiegels ab. Als Forderung ist lediglich die gesetzliche Forderung nach Lichtstärke sowie Ausleuchtungswinkel für den Blinker zu erfüllen, sowie eine sinnvolle Anordnung der Warnanzeige, sodass sie vom Fahrer aus sichtbar ist.

Das Beleuchtungsmodul 10 erstreckt sich in der Ausführungsform nahezu horizontal entlang der Spiegellängsachse. Es sind auch Ausführungsformen mit einer anderen Anordnung des Beleuchtungsmoduls denkbar. Dabei erstreckt sich das Beleuchtungsmodul von einem Emissionspunkt 5, der an der unteren Seite des Spiegels bzw. der Spiegelrahmeneinfassung liegt, bis zur Auskoppelfläche der Warnanzeige 6, die sich sinnvollerweise in der oberen Hälfte des Spiegelgehäuses befindet. Dabei ist es von Vorteil, wenn sich die Warnanzeige in einem Bereich 8, der sich entlang der Innenseite des Spiegelgehäuses befindet, angebracht ist.

In einer alternativen Ausführungsform ist auch ein Verlauf des Beleuchtungsmoduls 10 vertikal denkbar. Die Blinkerfunktion koppelt dann beispielsweise am oberen Rand des Außenspiegels an der Position 5' aus und die Warnfunktion am unteren Rand an der Position 6'.

Der Vorteil des einzigen Beleuchtungsmoduls ist es, dass das Beleuchtungsmodul je nach Ausführungsform des Fahrzeugspiegels im Gehäuse vormontiert werden kann. Es werden Befestigungsmittel benötigt, die das Beleuchtungsmodul aufnehmen und fixieren können. Dabei kommen alle bekannten Möglichkeiten wie Verklipsen, Verkleben, Schweißen zum Einsatz.

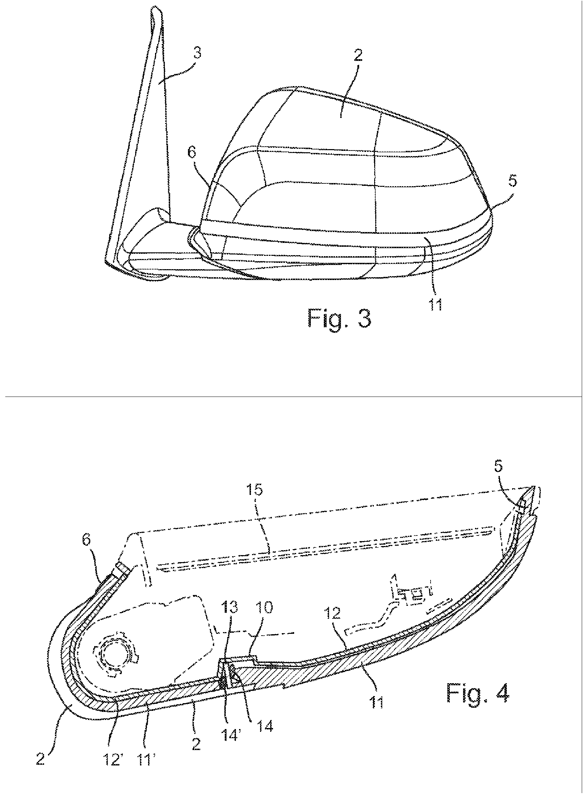

Figur 3 zeigt den Fahrzeugaußenspiegel der Figur 2 in der Blinkrichtung gegen die Fahrtrichtung des Fahrzeugs. Die Spiegelrückseite wird dabei vom Gehäuse 2 abgedeckt. Die Gehäuseabdeckung 2 wird von einem Lichtfenster 11 unterbrochen.

Dieses Lichtfenster erstreckt sich über die gesamte Außenkontur des Außenspiegels in seiner Längsrichtung. An der äußersten Stelle wird das Licht für die Blinkerfunktion im Auskoppelbereich 5 ausgekoppelt. An der inneren fahrzeugseitigen Seite 8 des Gehäuses 2 wird das Licht für die Warnanzeige durch das Auskoppelstelle 6 zur Verfügung gestellt. Für eine solche Ausführungsform, in dem die Beleuchtungsmodul 10 über seine gesamte Erstreckung von außen sichtbar ist, ist ein in der Bauhöhe schmales Lichtfenster 11, wie hier gezeigt, von Vorteil. Die Gehäuseabdeckung 2 kann dabei eine Aussparung aufweisen, in die das Lichtfenster hineinpasst. Alternativ dazu ist auch ein zwei- oder mehrteiliger Gehäuseaufbau möglich, sodass unterschiedliche Gehäuseteile das Beleuchtungsmodul 10 einfassen. Wie aus Figur 3 auch zu erkennen ist, ist es auf einfache Weise möglich, aus Designgründen Teile des Lichtfensters mit der Gehäuseabdeckung abzuschatten und nur dedizierte Aussparungen an dafür vorgesehen Bereichen vorzusehen. Dazu werden Gehäuseteile mit dekorativen Aussparungen versehen und das Beleuchtungsmodul erstreckt sich hinter der Gehäuseabdeckung im Inneren des Außenspiegels. Die Einteiligkeit des Beleuchtungsmoduls bleibt dabei erhalten.

Figur 4 zeigt einen Schnitt durch einen Außenrückblickspiegel entlang eines erfindungsgemäßen Beleuchtungsmoduls 10. In Figur 4 ist ein Querschnitt durch einen Gehäuseabdeckung 2 dargestellt, die ein schematisch dargestelltes Spiegelglas umfasst. Das Beleuchtungsmodul 10 weist zwei Teilbereiche auf, die im Bereich einer Leiterplatte 13 auf einander zulaufen und eventuell zusammenstoßen. Die Lichtfenster 11 und 11' stoßen an diesem Punkt zusammen. Die Lichtfenster 11 und 11' folgen der Außenkontur des Außenspiegels. In der Ausführungsform der Figur 4 sind die Lichtfenster gleichzeitig als Lichtleiter für den Transport des Lichtes von der Einkoppelstelle an der Leiterplatte 13 bis an die Auskoppelstellen entlang der Lichtleiter und am Ende den Auskoppelbreichen 5 und 6 ausgebildet. In die Lichtleiter gleich Lichtfenster wird Licht von LEDs 14, 14', die auf der Leiterplatte 13 montiert sind, eingespeist. Das Licht der LED 14 wird in Reaktion auf die Blinkersteuerung emittiert und folgt dabei dem Lichtleiter 11 bis zum Auskoppelpunkt 5. Das Licht der Warnanzeige wird über die LED 14' emittiert und über den Lichtwellenleiter 11' bis zur Auskoppelfläche 6 geleitet. Die Lichtwellenleiter sind dabei in einem Gehäuse 12 der Beleuchtungseinheit 10 eingebaut, das sich über die gesamte Ausdehnung der Lichtfensters 11, 11' erstreckt. Das Gehäuse 12 der Beleuchtungseinheit weist Vorrichtung zur Befestigung an der Gehäuseabdeckung des Außenspiegels auf.

In der Ausführungsform nach Figur 4 ist der Lichtwellenleiter 11' teilweise von der Gehäuseabdeckung 2 verdeckt. Eine Abdeckung des Beleuchtungsmoduls nach außen durch Teile des Gehäuses ist an verschiedenen Stellen sinnvoll. Im Bereich der Einkopplung an der Leiterplatte kann eine solche Abdeckung den Blick auf die Schaltung abschirmen.

Gerade im Bereich des Gelenkes des Spiegelkopfes mit einem kleinen Krümmungsradius ist die Gehäuseabdeckung vorhanden. Licht wird für die Warnanzeige nur an der Auskoppelfläche 6 ausgekoppelt. Das Abdecken oder Nichtabdecken des Lichtwellenleiters bzw. Lichtfensters ist eine Frage des Designs des einzelnen Spiegels. Eine Abdeckung ist nur dann technisch sinnvoll, wenn wie im Beispiel von Figur 4 durch enge Radien Streustrahlungen der Lichtwellenleiter nicht zu vermeiden sind.

Die senkrecht zur Längenausdehnung der Lichtleiter 11, 11' eingesetzte Leiterplatte 13 dient gleichzeitig zur Abschattung der beiden Bereiche voneinander. Wird die LED 14 zur Beleuchtung des Blinkers aktiviert, leuchtet lediglich der Lichtleiterbereich 11 auf und die Abstrahlung erfolgt größtenteils über den Auskoppelpunkt 5.

Wird die Warnanzeige angesteuert, wird die LED 14' aktiviert. Die Auskoppelfläche 6 der Warnanzeige wird beleuchtet.

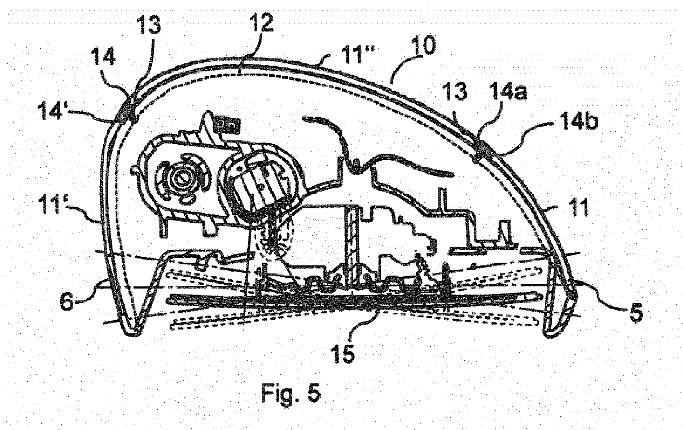

Figur 5 zeigt eine weitere Ausführungsform des Beleuchtungsmoduls 10. Hier ist der Querschnitt durch einen Türbrüstungsspiegel gezeigt. Türbrüstungsspiegel sind durch ihren halbkugeligen Schalenaufbau für die Erfindung sehr gut geeignet. Das Beleuchtungsmodul 10 weist in diesem Beispiel zwei Leiterplatten 13 mit zwei Einkoppelstellen und unterschiedlichen LEDs auf. An der linken Lichteinkoppelstelle sendet die LED 14' Licht für die Beleuchtung eines Warnhinweises aus. Die LED 14' kann dabei als farbige LED gestaltet sein, wenn eine amberfarbige oder rote Warnanzeige notwendig ist. Die LED 14 koppelt ihr Licht in den Lichtleiter 11" ein, ebenso die LED 14a, die sich an der zweiten Einkoppelstelle befindet. Der Lichtleiterbereich 11" zwischen den beiden Einkoppelstellen dient dem Design des Fahrzeugs und kann für eine beliebige Abstrahlung ausgelegt werden, da er keinen gesetzlichen Regelungen folgen muss. Die LED 14b koppelt Licht in den letzten Teilbereich 11 des Lichtleiters ein und muss mit der Auskoppelung an der Stelle 5 den gesetzlichen Vorgaben genügen.

Das Gehäuse 12 des Beleuchtungsmodule ist nur gestrichelt dargestellt. Es erstreckt sich entlang aller Lichtleiterabschnitte und umfasst alle Leiterplatten mit elektrischen Ansteuerungen. Das Beleuchtungsmodul kann direkt zwischen zwei Teilen der Gehäuseabdeckung 2 eingebaut werden.

Durch die Dreiteilung der lichtemittierenden Bereiche in diesem Ausführungsbeispiel ist die Aufnahme einer weiteren Funktion in das Beleuchtungsmodul möglich. Der Bereich des Lichtfensters 11' bleibt für einen Warnanzeige, da der Bereich für den Fahrer gut sichtbar ist, der Bereich 11 bleibt für die Blinkerfunktion reserviert. Der mittlere Bereich aber kann getrennt angesteuert werden und dadurch eine Positionsleuchte darstellen. Es ist auch denkbar, dass dieser Bereich mit weißen LEDs ausgeleuchtet wird und eine Umfeldleuchte ergibt.

Der mittlere Bereich der Beleuchtungseinheit kann zudem als Tagfahrlicht gestaltet sein.

### Legende

- 1: Außenspiegel
- 2: Spiegelkopf
- 3: Spiegelfuß
- 4: Öffnung für Spiegelglas
- 5: Auskoppelbereich Blinker
- 6: Auskoppelfläche Warnanzeige
- 7: Warnanzeigemodul
- 8: Innere Gehäuseabdeckung
- 9: Spiegelrahmen
- 10: Beleuchtungseinheit
- 11: Lichtfenster
- 12: Modulgehäuse
- 13: Leiterplatte
- 14: LEDs
- 15: Spiegelglas

## Patentansprüche

1. Beleuchtungsmodul (10) für einen eine Gehäuseabdeckung (2) aufweisenden Außenrückblickspiegel eines Fahrzeugs, mit zwei Lichtfenstern (11, 11'), die dafür geeignet sind, der Außenkontur eines Außenrückspiegels zu folgen,
wobei das Beleuchtungsmodul (10) zwei Teilbereiche aufweist, die im Bereich einer Leiterplatte (13) aufeinander zulaufen und dort zusammenstoßen, so dass die Lichtfenster (11, 11') an diesem Punkt zusammenstoßen, und **dadurch gekennzeichnet, dass** die Lichtfenster (11, 11') gleichzeitig als Lichtleiter für den Transport des Lichtes von jeweils einer Einkoppelstelle an der Leiterplatte (13) bis an Auskoppelstellen entlang der Lichtleiter und Auskoppelbereichen (5, 6) am Ende der Lichtleiter ausgebildet sind, wobei das Licht von LEDs (14, 14'), die auf der Leiterplatte (13) montiert sind, in die Lichtleiter (11, 11') so eingespeist wird, dass
i) das Licht einer ersten LED (14) in Reaktion auf eine Blinkersteuerung emittiert wird und einem ersten Lichtleiter (11) bis zu einem ersten Auskoppelbereich (5) in Form eines Auskoppelpunktes folgt, und
ii) das Licht einer zweiten LED (14') als für den Fahrer des Fahrzeugs sichtbare Warnanzeige emittiert wird und dem zweiten Lichtleiter (11') bis zu einem zweiten Auskoppelbereich (6) in Form einer Auskoppelfläche folgt, und wobei das Beleuchtungsmodul (10) ein Gehäuse (12) aufweist, in dem die Lichtleiter des Beleuchtungsmoduls (10) eingebaut sind, wobei das Gehäuse (12) sich über die gesamte Ausdehnung der Lichtfenster (11, 11') erstreckt.

2. Beleuchtungsmodul nach Anspruch 1, **dadurch gekennzeichnet, dass** das Gehäuse (12) des Beleuchtungsmoduls (10) Vorrichtungen zur Befestigung an der Gehäuseabdeckung (2) des Außenrückblickspiegels aufweist.

3. Beleuchtungsmodul nach einem der Ansprüche 1 oder 2, **dadurch gekennzeichnet, dass** die Leiterplatte (13) senkrecht zur Längenausdehnung der Lichtleiter eingesetzt ist.

## Claims

1. Lighting module (10) for an external rear-view mirror, which has a housing cover (2),
having two light windows (11, 11'), which are suitable for following the outer contour of the external rear-view mirror,
the lighting module (10) comprising two subregions, which converge with one another in the region of a printed circuit board (13) and meet there, so that the light windows (11, 11') meet at this point,
**characterised in that** the light windows (11, 11') are simultaneously configured as light guides for transporting the light respectively from an input position on the printed circuit board (13) to an output position along the light guide and output regions (5, 6) at the end of light guides, the light from LEDs (14, 14'), which are mounted on the printed circuit board (13), being fed into the light guides (11, 11') in such a way that
i) the light of a first LED (14) is emitted in response to a turn-signal control and follows a first light guide (11) as far as a first output region (5) in the form of an output point, and
ii) the light of a second LED (14') is emitted as a visible warning display for the driver of the vehicle and follows the second light guide (11') as far as a second output region (6) in the form of an output surface,
the lighting module (10) having a housing (12) in which the light guides of the lighting module (10) are fitted, the housing (12) extending over the entire extent of the light windows (11, 11').

2. Lighting module according to claim 1, **characterised in that** the housing (12) of the lighting module (10) comprises devices for fastening on the housing cover (2) of the external rear-view mirror.

3. Lighting module according to either of claims 1 and 2, **characterised in that** the printed circuit board (13) is fitted perpendicularly to the longitudinal extent of the light guides.

## Revendications

1. Module d'éclairage (10) pour un rétroviseur extérieur, comportant un recouvrement de boîtier (2), d'un véhicule,
avec deux fenêtres de lumière (11, 11') qui sont conçues pour suivre le contour extérieur d'un rétroviseur extérieur,
dans lequel
le module d'éclairage (10) comporte deux zones partielles qui se dirigent l'une vers l'autre et se rejoignent dans la zone d'une carte de circuits imprimés (13) de telle sorte que les fenêtres de lumière (11, 11') se rejoignent à cet endroit,
**caractérisé en ce que**
les fenêtres de lumière (11, 11') se présentent en même temps sous la forme de guides d'ondes optiques pour le transport de la lumière respectivement d'un point de couplage sur la carte de circuits imprimés (13) à des points de découplage le long des guides d'ondes optiques et de zones de découplage (5, 6) à l'extrémité des guides d'ondes optiques, la lumière venant de DEL (14, 14') qui sont montées sur la carte de circuits imprimés (13) étant injectée dans les guides d'ondes optiques (11, 11') de telle sorte
i) que la lumière d'une première DEL (14) soit émise en réaction à une commande de clignotement et suive un premier guide d'ondes optiques (11) jusqu'à une première zone de découplage (5) sous la forme d'un point de découplage, et
ii) que la lumière d'une deuxième DEL (14') soit émise comme voyant visible par le conducteur du véhicule et suive le deuxième guide d'ondes optiques (11') jusqu'à une deuxième zone de découplage (6) sous la forme d'une surface de découplage, et
dans lequel le module d'éclairage (10) comporte un boîtier (12) dans lequel sont installés les guides d'ondes optiques du module d'éclairage (10), lequel boîtier (12) s'étend sur toute

2. Module d'éclairage selon la revendication 1, **caractérisé en ce que** le boîtier (12) du module d'éclairage (10) comporte des dispositifs pour la fixation au recouvrement de boîtier (2) du rétroviseur extérieur.

3. Module d'éclairage selon l'une quelconque des revendications 1 ou 2, **caractérisé en ce que** la carte de circuits imprimés (13) est insérée perpendiculairement à l'extension longitudinale des guides d'ondes optiques.
